# EUROPEAN PATENT APPLICATION

(11) **EP 0 727 871 A1**
(43) Date of publication of application: **21.08.1996**
(21) Application number: 96810081.8
(22) Date of filing: 08.02.1996
(51) Int. Cl.: H02P 1/00, B23H 7/04

(54) **Machine for capacitive discharge electroerosion with control of energy released by a discharge**

(30) Priority: 15.02.1995 CH 434/95
(71) Applicant: Sarix S.A., 6604 Locarno (CH)
(72) Inventor: Salim, Ehsan, CH-6616 Losone (CH); Rigamonti, Giorgio, CH-6604 Locarno (CH)
(74) Representative: Fiammenghi-Domenighetti, Delfina

(57) **Abstract**

In a machine for electroerosion with operating head and an electrical/electronic system which generates current pulses by capacitive discharges between electrode (5) and piece (6) to be worked, said system is provided with means (1, 2, 3, 4, 7, 8) which interrupt the current between tool (5) and piece (6) generated by a discharge when the energy developed by the latter has reached a certain value.

This can be achieved with single capacitor (11) or also simply by interrupting the discharge when the latter has reached a preset current intensity.

## Description

This invention relates to the area of electroerosion machines. These machines remove a predetermined amount of material and carry it away in geometric shapes, themselves predetermined, from a piece being worked, so as to give the piece a desired final shape, said removal being accomplished by the action of an electric arc which forms between the piece being worked and an appropriately shaped electrode which will hereafter be called "tool" in reference to its function.

A close sequence of voltage pulses applied between the tool and the piece being worked causes an identical sequence of electric arcs as first described in a dielectric material, generally liquid, which is introduced between the piece and the tool, or in which these are introduced.

In the prior art the aforementioned voltage is generated between the capacitor plates, connected respectively to the tool and to the piece, for operating a voltage generator which charges them, the capacitive discharge between the aforementioned plates acting as the current pulse which triggers an electrical arc as described above.

Obviously, the amount of material removed with each discharge, to a certain extent also the method of removing the material, depends on a number of factors, such as voltage between the tool and the piece, their distance from one another and type of electricity, and on another factor, which is the energy released in a single discharge, namely of the load voltage and that of the capacitor capacitance, which give the discharge current a certain maximum intensity.

Since the first group of factors cited above cannot be altered beyond certain predetermined limits imposed by the physical nature of the electroerosion procedure, where to vary the quantitative and qualitative effect of discharges, what must currently be done is to install a plurality of capacitors of various capacitances, which can be connected selectively and in parallel, to the tool/piece pair. This includes creation of a rather large electrical system which may be difficult to fit inside the operating head of the machine which supports the electrode/tool, and which will therefore be located beside it, and connected to it with rather long cables, necessarily with a certain inductance which can at times be considerable and which has adverse effects on the manner in which the work is being done, as will be described in more detail below. Moreover, the variation in the amount of energy in play for one discharge can only be regulated by degrees according to the scale of capacitances of the various capacitors installed or combinations thereof.

There is another aspect to the problem which cannot be ignored: to obtain a machine which can be regulated effectively, a proper number of capacitors must be installed, which add considerable bulk to the assembly.

The inventors of this invention have found a solution which eliminates the aforementioned drawbacks and is applicable to the type of electroerosion machine described and cited in the preamble of attached claim 1, which describes a machine characterized by the fact that its electrical/electronic system is equipped with means which can interrupt a capacitive discharge as soon as the energy being released has attained a certain value.

A preferred embodiment is intended to measure the intensity of the discharge current, interrupting it only when the current has reached a predetermined value.

As already mentioned, a more detailed description of the invention shall now be given in several of its preferred embodiments. For this purpose we shall refer to the attached diagrams as follows:
Figure 1 shows a diagram of the electrical/electronic system of a machine according to the prior art;
Figure 2 shows a diagram of the discharge current and voltage between the plates of a capacitor in the system shown in Fig. 1;
Figure 3 shows a diagram of the electrical/electronic system of a machine according to the invention;
Figure 4 shows a diagram of capacitor voltage and voltage of the discharge currents which can be obtained in the electrical/electronic system of a machine according to the invention.

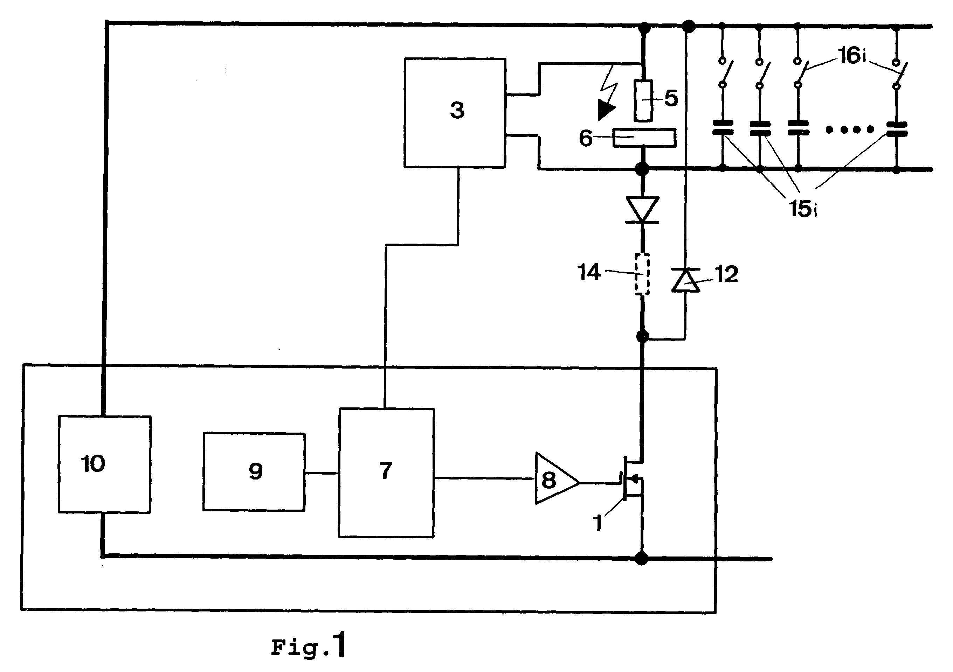

Figure 1 shows a typical system for a typical electroerosion machine: as already pointed out before, it is obviously voltage generator 10 connected in parallel to a series of capacitors 15i with various capacitances, the plates of each of them being in turn connected via switches 16i to the tool (5)-piece (6) pair; resistor 14 which is serially connected to the tool (5)-piece (6) pair. The system also has switch/power transistor 1, diode 12 for recovery of the induced energy, and other groups of logic circuits well known to those skilled in the art, such as so-called "Impulse driver" 9, "logic" 7, "driver" 8, and voltage measurement unit 3 in logical correlation between them.

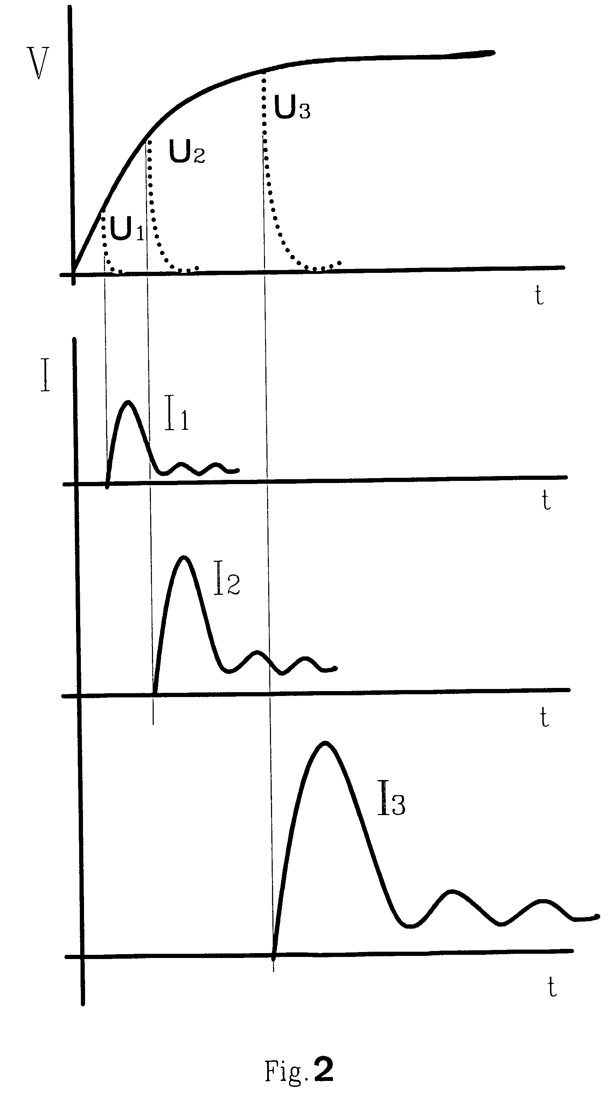

The energy in a discharge of this type of system, as already pointed out, depends mainly on the capacitance of activated capacitors 15i, on the resistance of resistor 14 and on that of the dielectric introduced between the tool and the piece. Intensity I of the current correlated to this has the behavior shown in Fig. 2 which also shows the corresponding curve of the charging voltage of the activated capacitors.

The amount of energy in play in a single discharge is given by the integral of the product of the voltage and the current correlated for the duration of the discharge and turns out to depend mainly on the distance between the tool and piece which is directly proportional to the resistance of the dielectric. This distance, as known to those skilled in the art, continually varies due to continual changes in the position of the electrode-tool relative to the piece. Consequently, depending on the circumstances, the discharge can be triggered indifferently when the capacitor has reached charging voltages of different values (U₁, U₂, U₃, in Fig. 2). The result of this is that the curves of discharge currents I₁, I₂, I₃ correlate to these values which vary in behavior and in growth, with the consequence that the energy of a single discharge varies more or less randomly from moment to moment between a minimum value and a maximum value, making it difficult to control the accuracy and precision of the resulting electroerosion work. It should also be mentioned that due to the inductance of the conductors which connect the electrical system and the operating head, the time necessary for reaching the maximum current is greater due to inclination of the relative curves in the initial discharge phase.

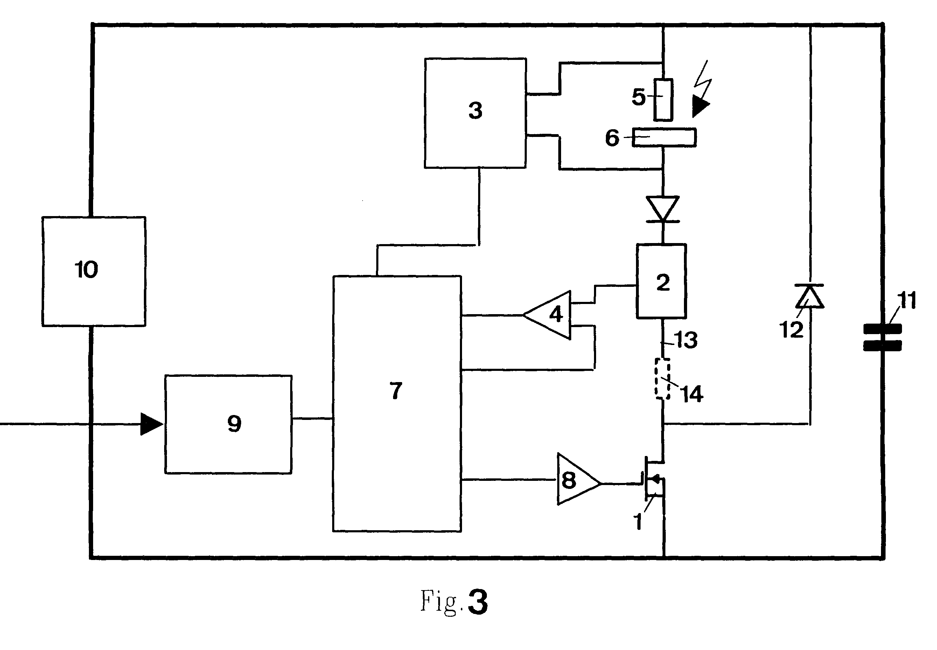

Let us consider instead the system in a machine according to the invention shown in Fig. 3. It shows single capacitor 11, with a capacitance equal to the sum of the capacitances of capacitors of the conventional machine whose system was shown in Fig. 1.

This capacitor is kept continually at its maximum load by generator 10, as opposed to the system described previously, where, due to the type of system, the capacitor is recharged after every discharge.

On the branch of circuit 13 which connects said capacitor in parallel to the tool (5)-piece (6) pair, as well as to aforementioned resistor 14, there is inserted element 2 which, at a value of the mostly constant voltage produced by generator 10, measures the intensity of the discharge current, which is compared via comparator 4 with a reference value set at the beginning or during the procedure in various existing logic units, similar otherwise with regard to the aforementioned. When the current intensity reaches this reference value, these logic units actuate switch/power transistor 1. This takes place for every single discharge, before automatic reinsertion of said transistor 1 into the last discharge.

For an even more accurate check, another possibility is to interrupt the current as soon as the voltage integral for the current in time (that is, developed energy) has reached a certain value measured by said logic circuits.

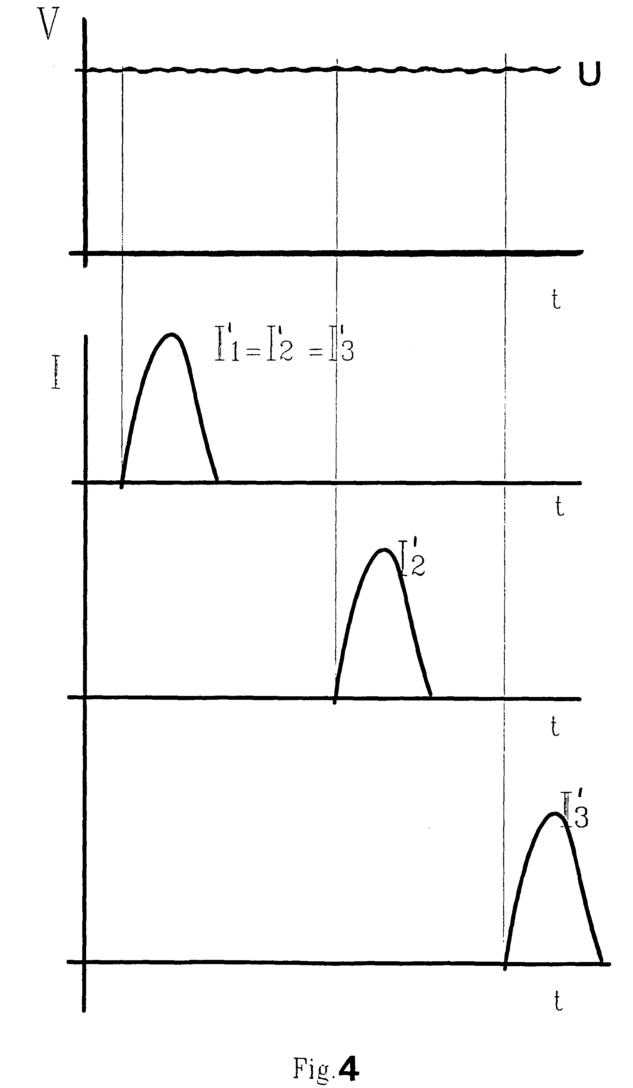

This consequently yields the diagrams of the intensity of current I shown in Fig. 4, from which it can be deduced that by integrating the voltage values multiplied by the maximum intensity current predetermined for the duration of the discharge, we obtain the developed energy of this discharge up to the precise time at which the discharge ends, since various maximum values of the energy developed had been preset, or, more simply, presetting only the intensity of the current which will be interrupted by switch/transistor 1, with the result being various curves I'₁, I'₂, I'₃ which correspond to identically equal amounts of energy, namely--all other conditions being equal--the identical amount of material removed by discharge. This produces a more regular erosion surface, and in particular allows accurate and continual regulation using a single capacitor. This also makes it possible to miniaturize to a certain extent the electrical/electronic system, and allows it to be inserted in the operating head of the machine (not shown) with connection cables having very low inductance values, which therefore allow higher operating speed, with discharges developing the same amount of energy as a conventional machine, but with a lesser discharge time.

Another advantage over the system shown in Fig. 1 is the fact that the maximum energy developed in a single discharge is not dependent on the generator voltage.

For working of pieces made of certain materials, the inventors have also made it possible to use the machine thus described equipped with a series of secondary capacitors of the conventional type, which can be inserted in parallel to single capacitor 11 so as, in these aforementioned special cases, to combine the effect of the two systems with regard to the energy developed in a single discharge. This type of system is not shown in the drawings, since it can be easily imagined by one skilled in the art.

Other embodiments are obviously conceivable to one skilled in the art by modifying the various logic units and/or their correlation while still remaining within the legal protective framework of the attached claims.

The embodiments thus described and depicted are to be understood only as non-restrictive and non-binding examples.

## Claims

1. Machine for working of metal pieces by electroerosion, comprising an operating head and an electrical/electronic system capable of generating a sequence of current pulses via capacitive discharge which takes place between an electrode (5) or tool of said operating head and the piece (6) which is to undergo electroerosion, characterized in that said electrical/electronic system is equipped with means (1, 2, 3, 4) capable of interrupting the current generated between the tool and piece by a capacitive discharge as soon as the energy developed by said current has reached a certain value.

2. Machine according to claim 1, wherein the means capable of interrupting a capacitive discharge comprise elements which measure the intensity of the discharge current, (2, 4) and said means controlling via logic circuits said interruption as soon as said current has reached a preset comparison value.

3. Machine according to claim 2, also comprising element (3) which measures the voltage between tool (5) and piece (6), wherein said logic circuits (7, 8, 9) control the interruption of the current as soon as the value of the integral in time of the product of said voltage and the intensity of the current has reached a preset value.

4. Machine according to one of claims 2 or 3, wherein the capacitive discharges are produced by a single capacitor (11) charged by a voltage generator (10), said discharges generating a sequence of current pulses, each of which is interrupted by switch (1) on the circuit on which they are travelling as soon as measurement and comparison elements (4, 10) detect that the current intensity or amount of energy developed has reached a preset reference value.

5. Machine according to claim 4, wherein the switch is power transistor (1).

6. Machine according to one of claims 4 or 5, wherein the electrical/electronic circuit comprises:
a) voltage generator (10);
b) capacitor (11) of predetermined capacitance connected in parallel to generator (10), with plates which are connected respectively to tool (5) and to branch (13) of the circuit leading to piece (6) which is to undergo electroerosion;
c) logic units (2, 4, 7, 8) capable of measuring the voltage between tool (5) and piece (6) and the intensity of the discharge current circulating in said circuit branch (13), comparing the latter to a reference value, and capable of interrupting said branch as soon as the intensity or the total energy developed has reached a preset value, triggering switch/power transistor (1);
d) diode (12) connected to tool (5) and to said circuit branch (13) downstream of power transistor (1);
e) resistor (14) with variable resistance inserted on said circuit branch (13).

7. Machine according to any of the preceding claims, wherein its electrical/electronic system is entirely contained within the operating head.

8. Machine according to one of claims 5, 6 or 7 also comprising a plurality of other secondary capacitors with various capacitances interconnected in parallel, which can be activated selectively, and whose plates are connected to the piece which is to undergo electroerosion (6) and to the tool (5) of said operating head respectively.
